# EUROPÄISCHE PATENTSCHRIFT

(11) **EP 1 065 963 B1**
(45) Veröffentlichungstag und Bekanntmachung des Hinweises auf die Patenterteilung: **11.12.2002**
(21) Anmeldenummer: 99915597.1
(22) Anmeldetag: 13.03.1999
(51) Int. Cl.: A47J 43/07

(54) **GLOCKENFÖRMIGE ABSCHIRMUNG FÜR DIE VERWENDUNG IN EINEM HAUSHALTSGERÄT, INSBESONDERE STABMIXER ODER HANDRÜHRER**
BELL-SHAPED SHIELD FOR USE IN A HOUSEHOLD APPLIANCE, ESPECIALLY A HAND-HELD BLENDER OR MIXER
ECRAN EN FORME DE CLOCHE DESTINE A UN APPAREIL MENAGER, NOTAMMENT UN MIXEUR OU UN BATTEUR

(30) Priorität: 21.03.1998 DE 19812541
(43) Veröffentlichungstag der Anmeldung: 10.01.2001
(73) Patentinhaber: Braun GmbH, 61476 Kronberg (DE)
(72) Erfinder: REBORDOSA, Antonio, E-08272 Sant Fruitos de Bages (ES); PENARANDA, Mariano, E-08005 Barcelona (ES); HERNANDEZ, Alejandro, E-43710 Santa Oliva (ES); CARRERAS, Francesc, E-08960 Sant Just Desvern (ES); BUTINYA, Anna, E-17820 Banyoles (ES)
(86) Internationale Anmeldenummer: EP9901656
(87) Internationale Veröffentlichungsnummer: WO99048411

(56) Entgegenhaltungen:
- BE-A- 557 983
- CH-A- 423 118
- DE-A- 4 321 653
- DE-A- 4 322 280
- "Mixgerät" NEUES AUS DER TECHNIK, Nr. 7/8, 1. August 1959 (1959-08-01), Seite 4 XP002112097 Würzburg

## Beschreibung

Die Erfindung betrifft eine glockenförmige Abschirmung für die Verwendung in einem Haushaltsgerät, insbesondere Stabmixer oder Handrührer, mit einem von der Innenwand der Abschirmung gebildeten Raum, der von der unteren Seite her über eine die Nahrungsmittel zu- bzw. abführende Öffnung zugänglich ist, wobei in dem Raum ein messerähnliches Arbeitswerkzeug von einer Antriebswelle derart In Drehung bringbar ist, daß Nahrungsmittel von diesem erfaßt, zerkleinert und/oder vermischt werden.

Eine derartige Abschirmung ist beispielsweise aus der US-A-3,299,924 bekannt. An die Abschirmung schließt sich nach oben ein mit einer Bohrung versehener Schaft an, in dem an Lagerstellen eine Antriebswelle drehbar und axial gesichert gehalten wird. Die Antriebswelle durchdringt die Wand der Abschirmung über eine Bohrung und ragt mit ihrem freien Ende geringfügig in den Raum der im wesentlichen glockenförmig ausgebildeten Abschirmung hinein. An diesem freien Ende ist ein quer zur Längsrichtung der Antriebswelle verlaufendes messerähnliches Arbeitswerkzeug ausgebildet, das zum Zerkleinern und Vermischen bzw. Pürieren von Nahrungsmitteln dient. Das andere Ende der Antriebswelle ist über eine Kupplungsvorrichtung mit einem Elektromotor eines Handmixers verbunden. Die Antriebswelle verläuft konzentrisch zum Schaft und der Abschirmung.

Im Betrieb des Handmixers werden durch die rotierende Bewegung des Arbeitswerkzeuges Nahrungsmittel über die am freien Ende der Abschirmung ausgebildete Öffnung angesaugt, zerkleinert und aufgrund der vom Messer ausgehenden Zentrifugalkräfte durch die an der Wand der Abschirmung ausgebildeten Schlitze nach außen herausgeschleudert. Bei längerem Einschalten des Gerätes werden die Nahrungsmittel auf diese Weise immer wieder zum Arbeitswerkzeug hin befördert, dort zerkleinert und wieder über die Abschirmung nach außen geschleudert. Dabei können selbstverständlich auch die Nahrungsmittel nicht nur über die Schlitze, sondern auch Teile am Rand über die Öffnung nach außen treten, von wo sie dann wieder zentral vom Arbeitswerkzeug angesaugt werden. Im Betrieb des Stabmixerteils werden also die Nahrungsmittel zerkleinert, vermischt und mit Luft durchsetzt. Letzteres erfolgt dann, wenn das Arbeitswerkzeug schnell genug rotiert und die Saugkräfte so groß sind, daß die Luft von der Oberfläche her angesaugt wird. Dies ist aber auch dadurch möglich, wenn die Abschirmung mit der Antriebseinrichtung öfters angehoben, also in Nähe der Oberfläche der Nahrungsmittel gebracht wird und nicht nur am Boden des mit überwiegend flüssigen Nahrungsmitteln gefüllten Behälters gehalten wird. Bei dieser Rühreinrichtung kann eine intensive Zerkleinerung und Durchmischung nur schwer in kürzester Zeit erfolgen, da der Innenraum der Abschirmung nahezu rotationssymmetrisch ausgebildet ist.

Aufgabe der Erfindung ist es nunmehr, eine Abschirmung für ein rotierendes Arbeitswerkzeug eines Haushaltsgerätes, insbesondere eines elektrischen Hand- oder Stabmixers, zu schaffen, bei dem eine erheblich intensivere Durchmischung, Zerkleinerung sowie größerer Lufteinschluß in kürzester Zeit erfolgen kann. Dabei soll die Abschirmung einfach herstellbar und leicht reinigbar sein.

Diese Aufgabe wird erfindungsgemäß durch die Merkmale des Patentanspruchs 1 gelöst.

Daduch, daß die Abschirmung an der Innenfläche Ausbuchtungen aufweist, werden die Nahrungsmittel, die vom Arbeitswerkzeug infolge der bei seiner Rotation entstehenden Saugkräfte angesogen werden, erfaßt, radial nach außen und gleichzeitig in Umfangsrichtung geschleudert. Dabei werden die Nahrungsmittel nach der Erfindung nun auch sowohl in die radial weiter draußen liegenden Ausbuchtungen wie gegen die Wandabschnitte befördert. Derjenige Teil der Nahrungsmittel, der gegen die Wandabschnitte prallt, wird dort abgebremst, umgelenkt und ein großer Teil zum Arbeitswerkzeug zurückbewegt und wiederum dort zerkleinert und vermischt. Ein anderer Teil der Nahrungsmittel gelangt in die Ausbuchtungen und wird über die Öffnung nach unten und nach außen befördert. Auf diese Weise entsteht ein kontinuierlicher Kreislauf der Vermischung, Zerkleinerung und der Lufteinführung.

Durch die Ausbuchtungen wird eine besonders turbulente Strömung im Raum der Abschirmung erreicht, so daß hierdurch auch die Nahrungsmittel intensiv vermischt und zerkleinert werden. Auch größere Nahrungsmittelstücke werden so besser vom Arbeitswerkzeug erfaßt, wenn sie nämlich in die Ausbuchtungen gelangen und dort festgehalten bzw. zurück zum Arbeitswerkzeug gelenkt werden. Dadurch, daß also in den Ausbuchtungen sich Nahrungsmittel mit geringerer Geschwindigkeit fortbewegen, ja sogar dort ab und zu zum Stillstand gelangen können, können auch diejenigen Nahrungsmittel, die in dem Raum zwischen radialer Außenkante des Messers und der Innenwand der Abschirmung, also auch in die Ausbuchtungen hineinragen, wie größere Stücke, derart abgebremst werden, daß sie dann, wenn sie von dem Arbeitswerkzeug erfaßt werden, noch derart träge sind, daß sie aufgrund der hohen Messergeschwindigkeit leicht zerschnitten werden. Durch die zusätzlich neben der Schneidenergie vom Arbeitswerkzeug auf die Nahrungsmittel übertragene Bewegungsenergie in Form von radialer und in Umfangsrichtung gerichteter Bewegung werden durch die Ausbuchtungen auch Nahrungsmittelteile an der Innenwand der Abschirmung nahezu schlagartig in ihrer Bewegung umgelenkt. Ein Teil der Nahrungsmittel wird sogar wieder zum Arbeitswerkzeug hin zurückgeführt und gleich wieder zerschnitten, gerührt und nach außen befördert.

Wie zuvor schon erwähnt, handelt es sich bei dem Arbeitswerkzeug vorzugsweise um ein Messer, das von beiden Seiten der Antriebswelle radial weg erstreckende Sichelteile aufweist, die in ihren in Drehrichtung vorderen Seiten mit Schneidkanten versehen sind und die - ähnlich einem Propeller - derart verdreht bzw. angestellt sind, daß hierdurch eine Art Pumpe entsteht, so daß die Nahrungsmittel vom Arbeitswerkzeug angesogen und anschließend radial nach außen befördert werden. Durch die Abschirmung entsteht ein gewisser Mischkreislauf, durch den sowohl bereits zerkleinerte wie auch noch nicht zerkleinerte Nahrungsmittel dem Messer zu- bzw. vom Messer abtransportiert, zerkleinert und vermischt werden. Ein großer Teil der Nahrungsmittel wird auch aus der Abschirmung radial herausbefördert und dadurch können neue Nahrungsmittel über die Öffnung in den Raum der Abschirmung gelangen, wenn seitlich in der Wand der Abschirmung zusätzlich Durchlässse ausgebildet sind.

Dadurch, daß die Ausbuchtungen in Längsrichtung der Abschirmung verlaufen, können diese von der Öffnung her auch leicht gereinigt werden. Die Ausbuchtungen können im Querschnitt von beliebiger Form, wie eckig, spitz, halbrund, oval etc., sein. Die jeweils an die Ausbuchtungen sich seitlich anschließenden Erhebungen dürfen dabei aber nicht in ihrer radialen Erstreckung nach innen in den Wirkungskreis des Messers eingreifen. Nach der Erfindung sind mehrere Freiräume am Umfang der Innenwand verteilt angeordnet, weil hierdurch eine besonders turbulente Strömung im Raum der Abschirmung entsteht.

Damit die Abschirmung beim Rühr- bzw. Zerkleinerungsvorgang besonders ruhig und erschütterungsfrei in den Nahrungsmitteln gehalten werden kann, ist es vorteilhaft, wenn die Freiräume gleichmäßig am Umfang an der Innenseite und möglicherweise dann auch noch von gleicher Dimension ausgebildet sind. Die Öffnung der Abschirmung ist dabei vorzugsweise immer größer als der größte Durchmesser des Messers. Es könnten aber auch kleinere Durchmesser für die Öffnung gewählt werden, was aber die Reinigung und den Einbau des Messers im Raum der Abschirmung verschlechtern könnte.

Durch die Merkmale des Patentanspruchs 2 ergibt sich ein besonders senkrechter Aufprall der Nahrungsmittel an der Innenwand der Abschirmung, so daß dann die Nahrungsmittel optimal püriert, zerkleinert und gemischt werden. Eine derartige Abschirmung kann auch leicht in einem Behälter hin- und her- und auf- und abbewegt werden.

Die Wand der Abschirmung wird erfindungsgemäß nur so dick gewählt, daß die an der Innenseite ausgebildeten Freiräume an der äußeren Mantelfläche Erhebungen bilden.

Durch die Merkmale des Patentanspruchs 3 entstehen bei einer dünnwandigen Abschirmung an der den Ausbuchtungen radial gegenüberliegenden Außenfläche Erhebungen, während die zwischen zwei Freiräumen an der Innenseite ausgebildeten Erhebungen an der äußeren Mantelfläche zu Einschnürungen werden. Eine derartige Form der Abschirmung ist besonders materialsparend, kostengünstig, leicht handhabbar und besonders einfach als Kunststoffspritzteil herstellbar.

Die Merkmale des Patentanspruchs 4 zeigen einen besonders vorteilhaften Verlauf der Wand der Abschirmung, bei der zu allem noch die Wand konzentrisch zur Antriebsachse verfäuft. Der wellen- oder zickzackförmige Verlauf der Wand der Abschirmung verläuft auch noch symmetrisch zur Antriebsachse der Abschirmung, wenn man von unten her senkrecht in die Öffnung der Abschirmung schaut. Es sind aber selbstverständlich auch andere Verläufe der Wandung möglich, wichtig ist dabei nur, daß die Wand mit rillenförmigen, furchenähnlichen oder noppenartigen Ausbuchtungen versehen ist, durch die sich die oben beschriebenen Vorteile ergeben.

Duch die Merkmale des Patentanspruchs 5 verläuft die äußere Mantelfläche zur Innenwand stets mit gleichem Abstand, d.h., die Wandstärke der Abschirmung ist in diesem Bereich über den gesamten Umfang gleich dick.

Nach den Merkmalen des Patentanspruchs 6 nehmen die Freiräume in ihrer Tiefe gegenüber der Wand der Abschirmung zur Öffnung hin zu, wodurch zur Öffnung hin am Rand die Vermischung, die Zerkleinerung und die Zerschlagung von Luftblasen zunimmt. Auch die Ansaugkraft des Arbeitswerkzeugs und die Beschleunigung der Nahrungsmittel in die Abschirmung hinein ist im Bereich des Arbeitswerkzeugs, also auch in dem Bereich, wo sich die Ausbuchtungen mit den tiefsten Profilen ergeben, am größten.

Gemäß den Merkmalen des Patentanspruchs 7 nimmt die Breite der Ausbuchtungen an der Innenfläche und somit auch die Breite der Erhebungen an der äußeren Mantelfläche zur Öffnung der Abschirmung hin zu, d.h. es entsteht eine besonders homogene Form der Abschirmung. An dieser Stelle sei noch erwähnt, daß unter den Einschnürungen diejenigen Furchen gemeint sind, die ein Betrachter erkennt, wenn er von außen auf die Oberfläche der Abschirmung schaut. Schaut ein Betrachter von unten senkrecht in die Öffnung, dann ergeben diese Einschnürungen nach innen gerichtete Ausbuchtungen. Entsprechend gilt dies für die benachbarten Erhebungen, die an der Innenwand die Ausbuchtungen ergeben.

Gemäß den Merkmalen des Patentanspruchs 8 laufen die Einschnürungen in der glockenförmigen Mantelfläche der Abschirmung zum Schaft hin aus, weil diese im wesentlichen parallel zur Antriebsachse der Abschirmung verlaufen und sich die Mantelfläche der Abschirmung hingegen nach oben zur Antriebsachse verjüngt, also schräg zur Antriebsachse verläuft. Gleiches gilt entsprechend den Merkmalen des Anspruchs 9, so daß auch die Innenwand der Abschirmung im oberen Bereich wieder kreisförmig ist. Dies ermöglicht, daß dort ein von der Antriebswelle durchdrungener Deckel eingesetzt werden kann, der den Innenraum der Abschirmung gegenüber dem oberen Raum abdichtet. Der obere Raum ist nämlich über eine Bohrung, in der die Antriebswelle verläuft, mit dem Raum einer elektrischen Antriebseinrichtung verbunden. Die Bohrung verläuft in einem Schaft, der an das der Öffnung gegenüberliegende Ende an der Abschirmung angeformt ist.

Dadurch, daß die Abschirmung zur Öffnung hin in ihrem Außen- wie Innendurchmesser zunimmt, ist es vorteilhaft, wenn auch die Ausbuchtungen an der Innenseite und die Einschnürungen an der Mantelfläche in ihrer Breite zur Öffnung hin zunehmen (Anspruch 10). Dies ermöglicht einen besseren Abfluß der Nahrungsmittel in den durch die Ausbuchtungen gebildeten Freiräumen.

Es ist aber auch denkbar, daß die Ausbuchtungen bzw. die Einschnürungen gemäß den Merkmalen des Patentanspruchs 11 schräg zur Antriebsachse, also entweder entgegen oder in der Drehrichtung des Messers, spiralförmig verlaufen. Hierdurch können die Nahrungsmittel auch noch eine Richtungsanpassung in Längsrichtung der Ausbuchtungen schräg nach oben bzw. schräg nach unten erhalten, je nachdem in welcher Richtung die Nahrungsmittel an der Innenwand der Ausbuchtungen auftreffen. Die Einschnürungen können aber auch von noppenartigen Vertiefungen in der Wand der Abschirmung gebildet werden, die in den Rand der Öffnung hineinreichen.

Gemäß den Merkmalen des Patentanspruchs 12 weist der die Öffnung begrenzende Rand der Abschirmung neben den in Längsrichtung an der Innenfläche entlang der Abschirmung verlaufenden Ausbuchtungen zusätzlich noch am Rand der Abschirmung verlaufende Wellentäler auf, die Durchlässe entstehen lassen, welche auch ein Teil der Nahrungsmittel radial nach außen an der Abschirmung austreten lassen. Dies ist insbesondere dann von Vorteil, wenn der Rand der Öffnung der Abschirmung auf einem Boden eines Behältnisses aufliegt, denn dann könnten über die vom Boden verschlossene Öffnung gar keine Nahrungsmittel mehr nach außen gelangen, sondern nur noch über die Durchlässe.

Bei einem wellen- oder zickzackförmigen Verlauf des Randes der Abschirmung entstehen durch die Einbuchtungen eine entsprechende Anzahl von Durchlässe, über die die Nahrungsmittel nach außen gelangen können (Anspruch 13). Diese Formen ermöglichen auch eine symmetrische Anordnung, so wie dies bei dem Verlauf der Ausbuchtungen und den Einschnürungen der Fall ist. Die wellen- oder zickzackförmige Ausbildung des Randes der Öffnung überlagert sich in radialer Richtung mit den Einschnürungen und Erhebungen, so daß sich ein in drei Ebenen verlaufender Randbereich ergibt.

Nach den Merkmalen des Patentanspruchs 14 bilden die Wellentäler, wenn man von vorne auf die Abschirmung schaut, die in Längsrichtung der Abschirmung tiefsten bzw. am weitesten hervorstehenen Punkte, so daß sie eine Ebene bilden, die beim Aufsetzen auf einem glatten Boden eines Behälters in die Ebene des Bodens fällt. Dies wird konstruktiv dadurch erreicht, daß die Stirnseite des Randes auf der Innenseite einer gedachten kegelförmigen Trichterfläche liegt, deren Spitze unterhalb der Öffnung auf der Antriebsachse der Ausnehmung ausgebildet ist. Hierdurch werden die radial äußeren Bereiche des Randes, nämlich Wänder der Ausbuchtungen (von innen gesehen) früher geschnitten als die radial näher an der Antriebsachse liegenden Bereiche, wie dies bei den Erhebungen der Fall ist. Dadurch bilden sich am unteren Rand die seitlichen Durchlässe.

Es ist aber auch denkbar, daß von außen gesehen die Einschnürung mit einem Wellenberg bzw. von innen gesehen die Ausbuchtung mit einem Wellenberg gemäß Anspruch 15 mit den Einbuchtungen kooperieren. Dies wird dadurch erreicht, daß die Stimseite des Randes auf der Außenfläche einer Kegelfläche verläuft, so daß die Kegelspitze vorteilhaft im Bereich der Ausnehmung oder im Bereich des Schaftes der Abschirmung auf der Antriebsachse liegt. Hierbei bilden die Spitzen der Wellentäler der Ausnehmung den vordersten Stimbereich, während die Wellenberge der Einbuchtungen zurückgesetzt sind. Die Wellentäler bilden also somit die Auflagefläche des Handmixers bzw. des an einem Haushaltsgerät ankuppelbaren Stabmixerschaftes. Durch die Wellenberge werden dann die Durchlässe gebildet. Der Kegelwinkel darf allerdings nicht kleiner sein, als dies die Krümmung der Abschirmung erlaubt, da sonst die Durchlässe zu groß werden bzw. von der Wand der Abschirmung zu viel weggeschnitten wird.

Durch die Merkmale des Anspruchs 16 wird eine konstante Dicke an der Wand der Abschirmung erreicht

Durch die Merkmale des Patentanspruchs 17 entsteht eine besonders homogene und in sich geschlossene Form der Abschirmung mit konstanter Dicke.

Zwei Ausführungsbeispiele der Erfindung sind in der Zeichnung dargestellt und werden im folgenden näher beschrieben. Es zeigen:
- Fig. 1: Seitenansicht auf ein erstes Ausführungsbeispiel einer erfindungsgemäßen Abschirmung,
- Fig. 2: Draufsicht von oben in Richtung X auf die Abschirmung nach Fig. 1,
- Fig. 3: Ansicht von unten her in Richtung Y auf die Abschirmung nach Fig. 1,
- Fig. 4: Längsschnitt gemäß der Schnittführung IV-IV nach Fig. 2,
- Fig. 5: Ansicht von unten her in Richtung Y auf die Abschirmung nach Fig. 1, wobei allerdings durch Pfeile dargestellt wurde, wie in etwa der Weg der vom Messer zerkleinerten bzw. beschleunigten Nahrungsmittel in der Abschirmung hinein bzw. aus der Abschirmung heraus verläuft,
- Fig. 6: Längsschnitt gemäß der Schnittführung IV-IV nach Fig. 2 durch die Abschirmung, wobei allerdings auch hier der Weg der in Fig. 5 dargestellten Nahrungsmittel in bzw. aus der Abschirmung heraus dargestellt ist,
- Fig. 7: perspektivische Seitenansicht auf ein zweites Ausführungsbeispiel einer zweiten Abschirmung nach der Erfindung,
- Fig. 8: Ansicht von oben in Richtung X1 auf die Abschirmung nach Fig. 7,
- Fig. 9: Längsschnitt gemäß der Schnittführung IX-IX nach Fig. 8 durch die Abschirmung, allerdings ohne Arbeitswerkzeug und Abdeckscheibe,
- Fig. 10: Längsschnitt gemäß der Schnittführung X-X nach Fig. 8 durch die Abschirmung, allerdings ohne Arbeitswerkzeug und Abdeckscheibe, wobei die Abschirmung um 180° entgegen dem Uhrzeigersinn in der Ebene gedreht dargestellt ist,
- Fig. 11: Ansicht von unten her in das zweite Ausführungsbeispiel der Abschirmung gemäß der Richtung Y1 nach Fig. 7, wobei auch hier der Einfachheit halber nur in einem Sektor der Abschirmung der Weg der Nahrungsmittel in bzw. aus der Abschirmung heraus durch Pfeile dargestellt ist,
- Fig. 12: Längsschnitt gemäß der Schnittführung IX-IX nach Fig. 8 durch das zweite Ausführungsbeispiel der Abschirmung, wobei allerdings hier in der Abschirmung das Arbeitswerkzeug ausgebildet ist und wobei auch hier der etwaige Weg der Nahrungsmittel in bzw. aus der Abschirmung heraus durch Pfeile dargestellt ist und
- Fig. 13: Längsschnitt gemäß der Schnittführung X-X nach Fig. 8 durch die Abschirmung des zweiten Ausführungsbeispiels, wobei auch hier das Arbeitswerkzeug in der Abschirmung ausgebildet ist und gleichzeitig der etwaige Weg der Nahrungsmittel in bzw. aus der Abschirmung heraus durch Pfeile dargestellt ist. Auch hier ist die Abschirmung um 180° entgegendem Uhrzeigersinn in der Ebene gedreht dargestellt.

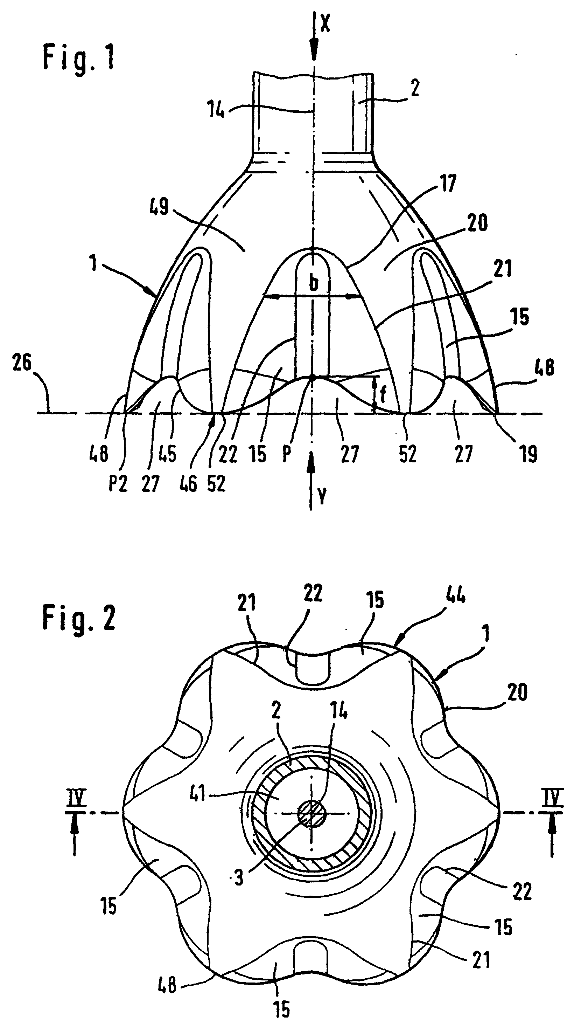

In den Figuren 1 bis 13 sind zwei Ausführungsbeispiele einer Abschirmung 1 dargestellt, die nach den Figuren 1, 4, 6, 7, 9, 10, 12 und 13 aus einer sich nach unten radial nach außen erweiternden glocken- bzw. tulpenförmigen oder schirmähnlichen Form besteht. In der Erfindung wurden alle solche Formen in einem einzigen Begriff "glockenförmig" zusammengefaßt, d.h., alle derartige Formen fallen unter die Erfindung. Nach oben schließt sich an die Abschirmung 1 ein Schaft 2 an, der mit einem in der Zeichnung nicht dargestellten Gehäuse einer vorzugsweise elektrischen Antriebseinrichtung verbunden ist. In dem Schaft 2 verläuft eine Antriebswelle 3, die mit einem in der Zeichnung nicht dargestellten Elektromotor in Drehverbindung steht. Die Antriebswelle 3 ist über in der Zeichnung nicht dargestellte Lagerungen in dem Schaft 2 drehbar gelagert.

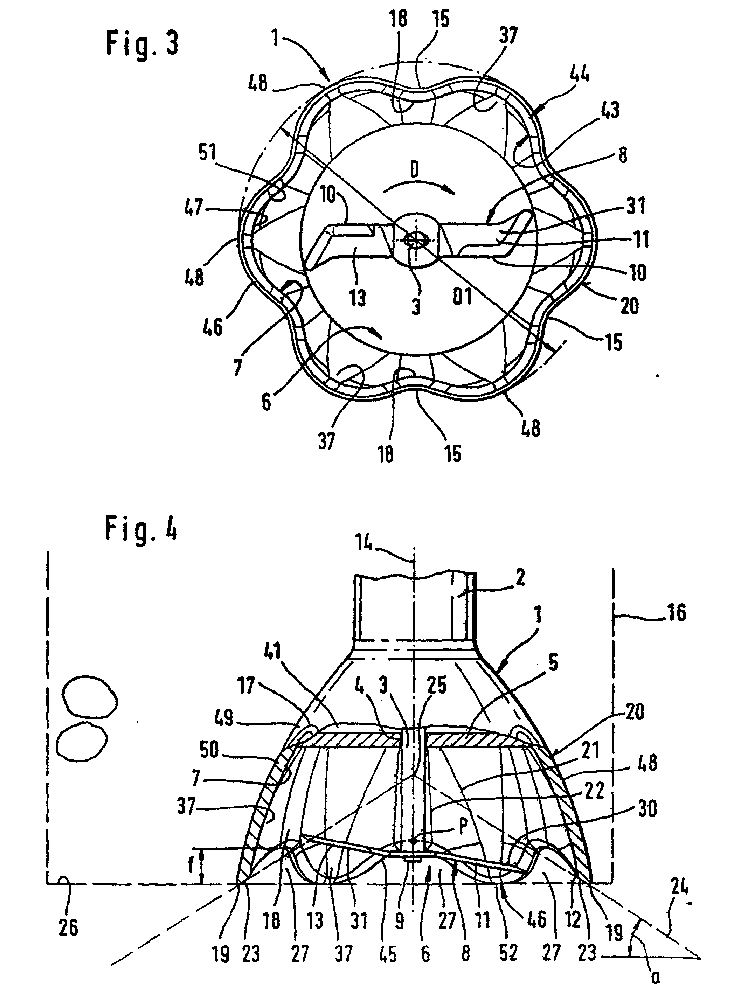

Der Schaft 2 ragt nach den Figuren 4, 5, 6 und 11 bis 13 über eine in einer Abdeckscheibe 5 ausgebildeten Bohrung 4 in den Raum 6 der Abschirmung 1. Die Abdeckscheibe 5 ist an der Innenwand 7 durch in der Zeichnung nicht dargestellte Abdichtmittel mit der Abschirmung 1 dichtend verklippst, verklebt, verschraubt oder sonstwie dichtend befestigt Ebenfalls ist die Bohrung 4 gegenüber der Antriebswelle 3 gedichtet, damit kein Wasser oder sonstige Nahrungsmittel in das Innere 41 des Schaftes 2 eindringen können, die dann gegebenenfalls die inneren Teile einer Antriebseinrichtung beschädigen könnten.

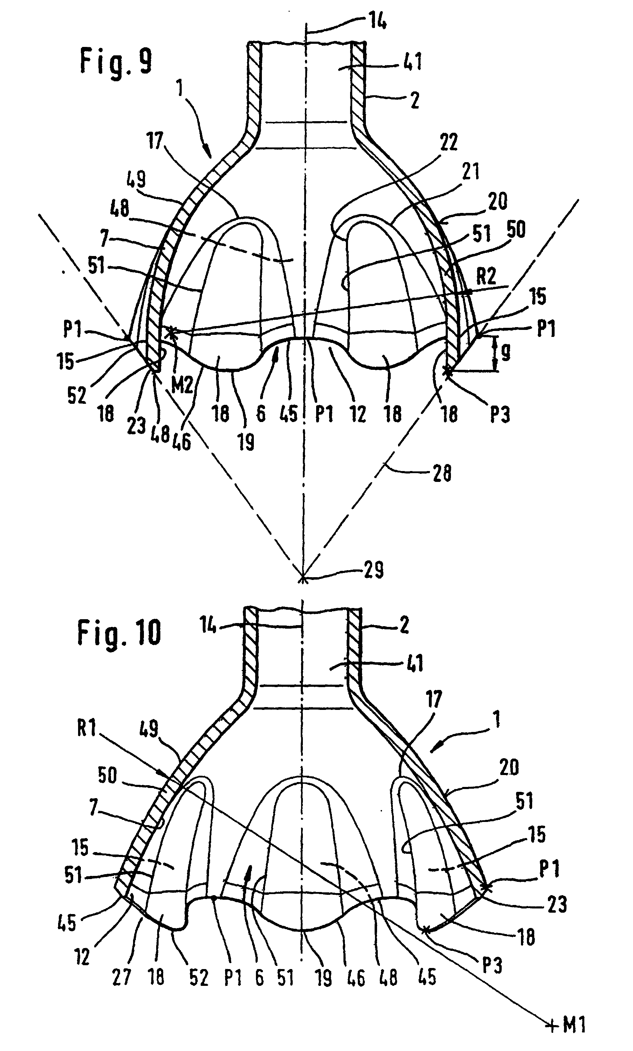

An dieser Stelle sei erwähnt, daß die Abschirmung 1 und der Schaft 2 Teil eines in den Zeichnungen nicht dargestellten Stabmixers oder eines Adapters für die Ankopplung an eine Antriebseinrichtung, beispielsweise Handrührer, ist. Weiterhin sei noch erwähnt, daß für entsprechend gleiche Bauteile in den Figuren 1 bis 13 gleiche Bezugszeichen gewählt wurden, um die Beschreibung zu vereinfachen. Auch wurden der Einfachheit halber in den Figuren 9 und 10 nicht die Abdeckscheibe 5, die Antriebswelle 3 und das als Messer ausgebildete Arbeitswerkzeug 8 dargestellt.

Das freie Ende 9 der Antriebswelle 3 ist nach den Figuren 3 bis 6 und 11 bis 13 mit einem als Arbeitswerkzeug dienenden Messer 8 versehen, das mit der Antriebswelle 3, beispielsweise durch Verstemmen, Verschweißen, Verschrauben oder ähnliche Befestigungsmittel, befestigt ist. Das Messer 8 verläuft diametral zu beiden Seiten der Antriebswelle 3 und weist in Drehrichtung D an seinen Vorderflächen gemäß den Figuren 3, 5 und 11 Schneidkanten 10 auf. Wie die Figuren 4, 12 und 13 zeigen, weist der eine Schenkel 11 schräg nach unten zur Öffnung 12 der Abschirmung hin, während der andere Schenkel 13 leicht nach oben in das Innere des Raumes 6 geneigt ist. Dies dient dazu, daß das Messer 8 in verschiedenen Schneidebenen schneidet und somit eine bessere Schneidwirkung pro Umdrehung erzielt wird. Gleichzeitig dient dieser Versatz der Messer, zu dem zusätzlich noch eine Verdrehung quer zu den Schenkeln 11, 13 der Messer 8 hinzu kommt (nicht dargestellt), dazu, daß bei deren Rotation Nahrungsmittel in den Raum 6 der Abschirmung 1 angesaugt, dort vermischt und zerkleinert und wieder Ober die Öffnung 12 nach außen befördert werden. Die Antriebswelle 3 ragt so weit in den Raum 6 der Abschirmung 1 hinein, daß das Messer 8 nahe der Öffnung 12 ausgebildet ist, allerdings noch so weit von der Öffnung 12 weg, daß ein seitlicher Eingriff über die Abschirmung 1 nicht zu Verletzungen einer Bedienungsperson führen.

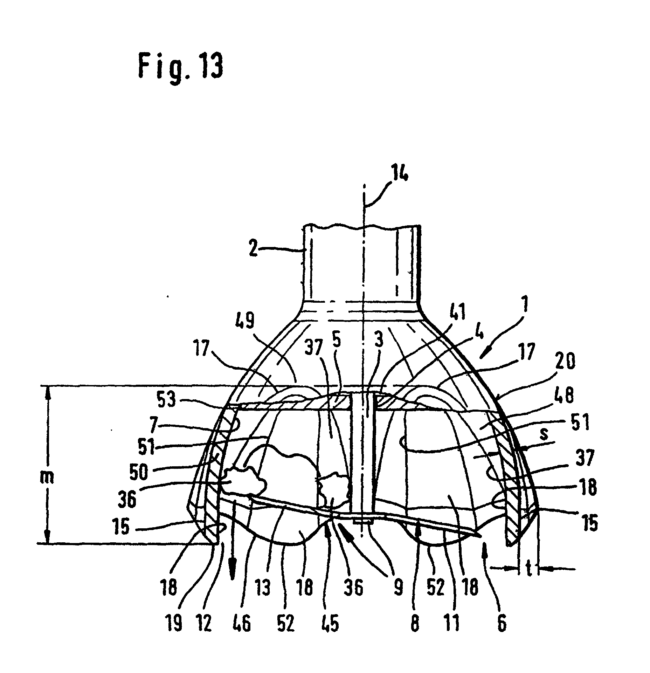

Die Abschirmung 1 weist in Längsrichtung ihrer Antriebsachse 14 an der Mantelfläche 20 verlaufende Einschnürungen 15 auf, deren Tiefe t (Fig. 13) nach oben hin abnimmt und etwa in Höhe der Absteckscheibe 5 an der äußersten Mantelfläche 20 im oberen Endabschnitt 49 ausläuft, wie dies durch die Linien 17, die sich an der äußersten Mantelfläche 20 befinden, in den Figuren dargestellt ist Das Auslaufen der Einschnürungen 15 an der Mantelfläche 20 bzw. der Ausbuchtungen 47 an der Innenwand 7 verläuft in einer derartigen Höhe an der Abschirmung 1, daß sich an der Mantelfläche 20 bzw. an der Innenwand 7 in diesem Bereich wieder eine Kreisfläche 53 (Fig. 13) ausformen läßt, damit die ebenfalls als kreisförmig ausgebildete Abdeckscheibe 5 in diesem Bereich gut eingepaßt, befestigt und gedichtet werden kann. Die Einschnürungen 15 bzw. die Ausbuchtungen 47 sind so geformt, daß ihre Wandstärke s im wesentlichen mit der gesamten Wandstärke der Abschirmung 1 übereinstimmt, d.h., der Bereich, der an der Mantelfläche 20 als Einschnürung verläuft, ergibt an der Innenwand 7 eine entsprechende Erhebung 18 (Fig. 13). Es sei noch erwähnt, daß in der Beschreibung gleichzeitig von Ausbuchtungen 47 und Erhebungen 18 gesprochen wird; dies deshalb, weil davon ausgegangen wird, daß im Stand der Technik eine ringförmige Innenwand vorhanden ist, die dann nach der Erfindung mit Ausbuchtungen 47 und Erhebungen 18 versehen wird. Würde man allerdings einen Stand der Technik zugrunde legen, bei dem die Innenwand der Abschirmung die Bezugsgröße darstellt, so wären dann nach der Erfindung an der Innenwand nur noch Ausbuchtungen 18 ausgebildet. Von Einschnürungen könnte dann bei dieser Grundlage nicht mehr gesprochen werden. Der erste Weg der Definition erscheint allerdings sinnvoller, da dieser die Wellenform der Abschirmung 1 besser beschreibt.

Die Einschnürungen 15 sind am Umfang der Abschirmung 1 gleichmäßig so verteilt und dimensioniert, daß sich nach Fig. 3 bei einem größten Durchmesser D1 von etwa 80 mm sechs Einschnürungen 15 ergeben. Selbstverständlich können auch weniger oder mehr Einschnürungen 15 am Umfang gleichmäßig oder auch ungleichmäßig verteilt sein. Die Tiefe t der Einschnürungen 15 beträgt dabei etwa 9 mm, während der Abstand m von der Abstellfläche 19 und dem Auslauf der Einschnürungen 15 an den Linien 17 etwa 35 mm beträgt (Fig. 13). Dabei beträgt der Radius R1, der um den Mittelpunkt M1 geschlagen wird, etwa 96 mm (Fig. 10). Dieser Radius R1 bildet die radial äußerste Mantelfläche 20 der Abschirmung 1 an den Stellen, an denen keine Einschnürungen 15 vorhanden sind. Der tiefste Bereich der Einschnürungen 15 wird von einem Radius R2 definiert, der um den Mittelpunkt M2 geschlagen wird. Dieser beträgt von etwa 60 mm (Fig. 9). Während der Mittelpunkt M1 auβerhalb der Abschirmung 1 und unterhalb der Öffnung 12 ausgebildet ist, befindet sich der Mittelpunkt M2 in Nähe der Öffnung 12 innerhalb des Raumes 6 der Abschirmung 1, d.h., die Mantelfläche 20 der Abschirmung 1 weist im radial äußeren Bereich eine kleinere Krümmung auf, als im tiefsten Bereich der Einschnürungen 15. Das bedeutet wiederum, daß der radial äußerste Bereich sich im Querschnitt zum Ende hin öffnet, also mehr nach außen erweitert verläuft als dies im Bereich der Einschnürungen 15 der Fall ist, wo dieser Bereich mehr geschlossen, also sich wieder zum freien Ende der Öffnung 12 etwas verschließt.

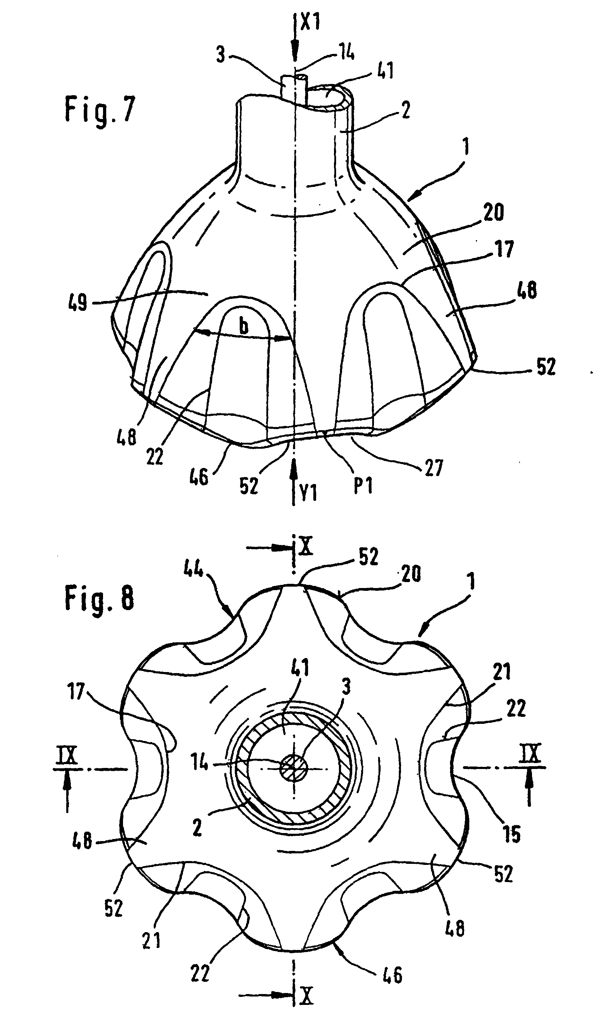

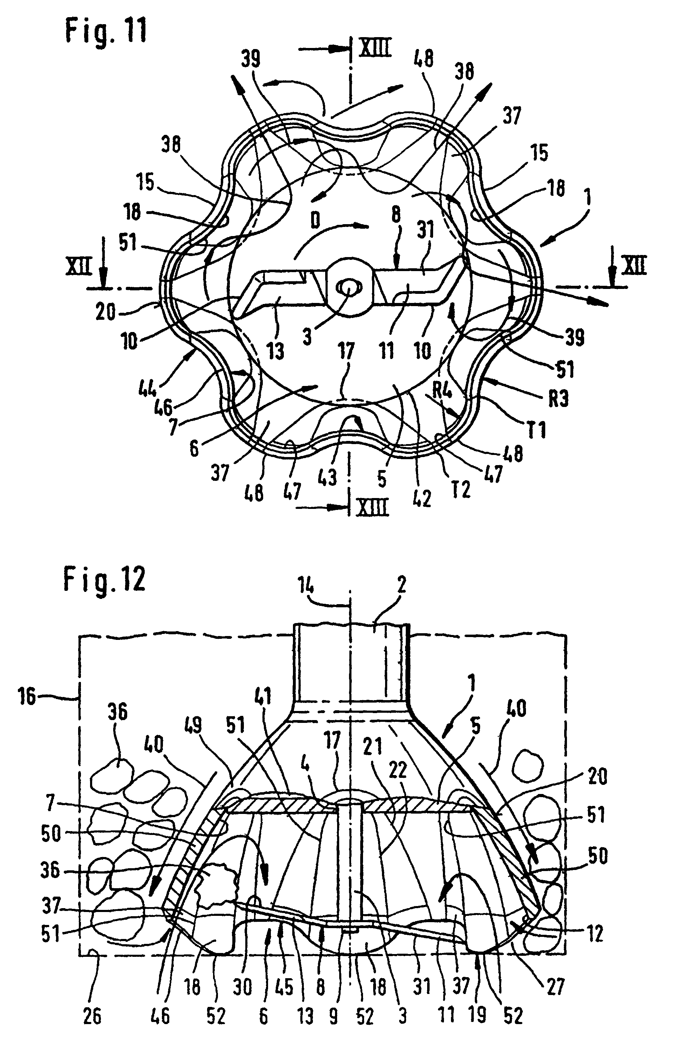

Wie aus Fig. 12 ersichtlich ist, zeigt die äußere Lichtkante 21 den Bereich an, an dem die Einschnürungen 15 an den umstrukturierten, glatten Bereichen der Mantelfläche 20 beginnt, während die innere Lichtkante 22 den Beginn der Talsohle der Einschnürungen 15 wiedergibt, d.h., das ist der Bereich, in dem die Talsohle 22 durch den Radius R3 definiert ist (Fig. 11). Dieser liegt bei etwa 11 mm. Im Bereich der Talsohle 22 zeigen sich bei der Abschirmung 1 nach den Figuren 1 bis 6 geringe Unterschiede hinsichtlich ihres Verlaufs gegenüber der Abschirmung 1 nach den Figuren 7 bis 13. In dem ersteren Ausführungsbeispiel sind nämlich die inneren Lichtkanten 22, die eine Talsohle bilden und die durch den Wandabschnitt 51 definiert sind, schmaler ausgebildet, als beim zweiten Ausführungsbeispiel, wo die Talsohle 22 zum freien Ende der Abschirmung 1 hin sich sogar noch erweitert. Auch erweitem sich die Einbuchtungen 15 zur Öffnung 12 hin, d.h., die Breite b nimmt in dieser Richtung konstant zu (Figuren 1 und 7). Das Maß m gibt die Höhe wieder, in der die Einbuchtungen 15 bzw. die Ausbuchtungen 47 am oberen Endabschnitt 49 enden.

Nach den Figuren gemäß der Ansicht von unten bzw. von oben auf die Abschirmung 1 (Figuren 2, 3, 5, 8 und 11) zeigt sich, daß der radial äußere Konturenverlauf von einem Ring 44 gebildet wird, der wellenförmig verläuft, d.h., dieser wird durch Radien R3, R4 und mit den Radien verbundenen Tangentien T1, T2 (Fig. 11) definiert. Es sind dabei auch durchaus andere Verläufe, wie Zickzack mit rechteckigem oder dreieckigem Verlauf denkbar. Die Innenwand 7 wird im Querschnitt nach Figuren 2, 3, 5, 8 und 11 ebenfalls von einem Ring 43 gebildet, der konzentrisch zum äußeren Ring 44 verläuft und der der Kontur des äußeren Ringes 44 folgt.

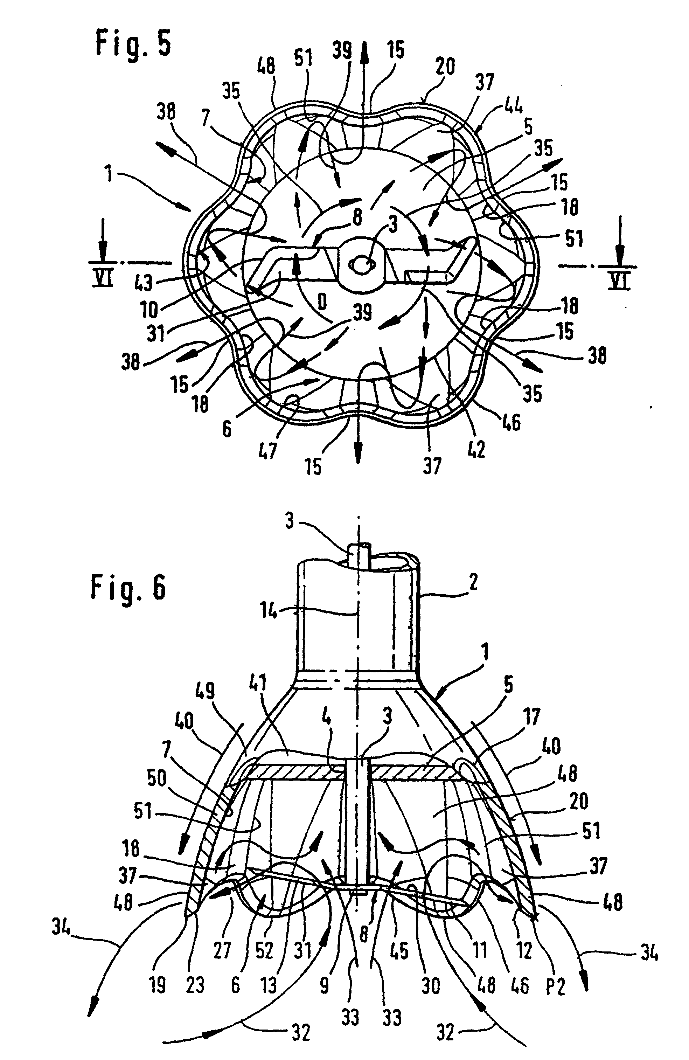

Nach den Figuren 4 und 6 verläuft die die Öffnung 12 der Abschirmung 1 des ersten Ausführungsbeispiels bildende Stirnfläche 23 schräg nach unten unter dem Winkel a (Fig. 4). Diese Stirnfläche 23 liegt auf einer gedachten Kegelmantelfläche 24, deren Spitze 25 auf der Antriebsachse 14 der Abschirmung 1 liegt. Bei dem Ausführungsbeispiel nach den Figuren 1 bis 6 liegt also die Stirnfläche 23 auf einer Kegelmantelfläche 24, d.h., die Einschnürungen 15, die nicht in derselben Ebene der Kegelmantelfläche 24 liegen, werden erst - je nach ihrer Tiefe in Abhängigkeit von Höhe und Durchmesser - in einem entsprechenden Abstand f von der Kegelmantelfläche 24 geschnitten. Hierdurch ergibt sich ein wellenförmiger Verlauf der Stirnfläche 23 sowohl in Y-, Y1-Richtung (Figuren 3 und 11) wie in Seitenansicht gemäß Figuren 1 und 7, so daß, wenn man die Abschirmung 1 auf einer Fläche 26 eines Tisches oder eines Topfbodens 26 (Figuren 4 und 12) abstellt, sich zwischen den einzelnen Abstellflächen 19 der Abschirmung 1 Durchlässe 27 bilden, über die Nahrungsmittel 36 in bzw. aus dem Raum 6 der Abschirmung 1 gelangen können. In den Figuren 1 bis 6 grenzen also an die Einschnürungen 15 die Durchlässe 27. Durch diesen Kegelschnitt bilden sich nach den Figuren 1 bis 7 also Wellentäler 45 und Wellenberge 52, die von den Durchlässen 27 begrenzt sind. Entsprechend gilt dies für die Abschirmung 1 nach den Figuren 7 bis 13, allerdings wird hier ein anderer Kegelschnitt vorgenommen, wie dies im folgenden näher beschrieben wird.

Im Gegensatz zu der Abschirmung 1 nach den Figuren 1 bis 6, wo die tiefsten Punkte P (Figuren 1, 4 und 6) den größten Abstand f der Durchlässe 27 zu den äußersten Punkten P2 der Abstellfläche 19 bilden, bilden nach den Figuren 7 bis 13 des zweiten Ausführungsbeispiels die Punkte P1 (Fig. 9) der radial äußeren Mantelfläche 20 mit den äußersten Punkten P3 an der Abstellfläche 19 den Abstand g, d.h., die Durchlässe 27 werden zwischen zwei Einschnürungen 15, also im Bereich der Ausbuchtungen 47 gebildet.

Die zweite Ausführungsform der Abschirmung 1 wird also dadurch erreicht, daß, wie dies insbesondere Fig. 9 zeigt, an die Stirnfläche 23 eine gedachte Kegelfläche eines Trichters 28 derart angelegt wird, daß die Abstellfläche 19 den am weitesten hervorstehenden Punkt P3 bildet, der den Schnittpunkt zwischen der Stirnfläche 23 und der Innenwand 7 in einer Erhebung 18 darstellt. Der mit dem größten Abstand g davon entfernte Punkt P1 bildet den höchsten Punkt der äußersten Mantelfläche 20 und ergibt sich als Schnittpunkt zwischen der Randfläche 46 und der Mantelfläche 20. Auf diese Weise ergibt sich in ihrer äußeren Gestaltung eine etwas anders aussehende Abschirmung 1, als sie in den Figuren 1 bis 6 dargestellt ist. Während also bei dem gedachten Trichter 28 des zweiten Ausführungsbeispiels die Spitze 29 auf der Seite liegt, auf der sich die Öffnung 12 der Abschirmung 1 befindet, also ihr zugewandt ist (Fig. 9), befindet sich beim ersten Ausführungsbeispiel nach Fig. 4 die Spitze 25 von der Öffnung 12 abgewendet, also oberhalb dieser auf der Antriebsachse 14.

Im ersten Ausführungsbeispiel ist die Abstellfläche 19 an den Wellenbergen 52 des Randes 46 und im zweiten Ausführungsbeispiel ist die Abstellfläche 19 an den Wellentälern 45 des Randes 46 ausgebildet.

Beide Ausführungsformen sind gleichgut geeignet für ein gutes und schnelles Vermischen und Zerkleinern von Nahrungsmitteln.

Die Wirkungsweise der Rühr-, Misch-, Emulgier- und Zerkleinerungseinrichtung mit der erfindungsgemäßen Abschirmung ist folgende:

Nachdem in einen Behälter 16 Nahrungsmittel 36 (diese sind in den Figuren 4 und 12 nur angedeutet dargestellt) eingebracht wurden, wird der mit der Abschirmung 1 versehene Schaft 2, der Teil eines nicht dargestellten Stabmixers oder der an ein sonstiges elektrisch angetriebenes Arbeitsgerät, wie Handrührer, aufsteckbar ist, in den Behälter 16 so weit eingetaucht, bis die Abstellfläche 19 nach Fig. 4 den Boden 26 des Behälters 16 berührt. Es ist aber auch selbstverständlich möglich, daß die Abstellfläche 19 der Abschirmung 1 in bestimmtem Abstand vor der Fläche 26 zu stehen kommt, wichtig ist nur dabei, daß das Messer 8 im wesentlichen die Nahrungsmittel 36 kontaktiert.

Nun wird der Antriebsmotor (nicht dargestellt) des Stabmixers eingeschaltet und die Antriebswelle 3 beginnt sich In Drehrichtung D (Figuren 3 und 11) zu drehen. Die Drehzahl des als Messer ausgebildeten Arbeitswerkzeugs 8 kann dabei vorteilhafterweise zwischen 3.000 und 15.000 Umdrehungen pro Minute liegen. Durch die Rotation des Messers 8 werden die Nahrungsmittel 36, wie sie nur in den Figuren 12 und 13 des zweiten Ausführungsbeispiels der Abschirmung 1 beispielhaft angedeutet dargestellt sind, von den Schneidkanten 10 des Messers 8 erfaßt und kleingeschnitten. Flüssige Nahrungsmittel gleiten an der Ober- und Unterseite 30, 31 des Messers 8 entlang, so daß diese durch die Neigung der Schenkel 11, 13 des Messers 8 in den Raum 6 der Abschirmung 1 hinein- und anschließend wieder aus der Abschirmung 1 herausbefördert werden, wie dies die Pfeilfolge 32 nach Fig. 6 zeigt. Gleichzeitig werden vom Zentrum der Abschirmung 1 her ebenfalls flüssigen Nahrungsmittel 36 in den Raum 6 vom Messer 8 angesaugt, wie dies die Pfeile 33 zeigen. Die Pfeilfolge 32 zeigt, daß die Nahrungsmittel 36 anschließend über die Durchlässe 27 wieder nach außen gelangen, was durch die Pfeile 34 nach Fig. 6 angezeigt wird. Gleichzeitig werden auch Nahrungsmittel 36 gemäß Fig. 5 im Kreis herumgedreht, was durch die Pfeile 35 angezeigt wird. Auch diese Nahrungsmittel 36 verlassen nach gewisser Zeit infolge der durch die Kreisbewegung erzeugten Zentrifugalkräfte die Abschirmung 1 über die Durchlässe 27 bzw. über die Öffnung 12.

Wenn die Nahrungsmittel 36 vom Messer 8 radial nach außen und gleichzeitig in Umfangsrichtung D geschleudert werden, gelangt auch ein großer Teil der Nahrungsmittel 36 in die an der Innenwand 7 der Ausnehmung 1 zwischen zwei Erhebungen 18 ausgebildeten, auf dem kürzesten Weg in Richtung Antriebsachse 14 verlaufenden, rinnenartigen Ausbuchtungen 47, wenn man von unten her (Figuren 3, 5 und 11) bzw. in die Innenwand 7 im Längsschnitt nach den Figuren 4, 6 und 12 bis 13 in den Raum 6 der Abschirmung 1 schaut. Auf die Innenwand 7 gesehen, werden die an der Mantelfläche 20 ausgebildeten Einschnürungen 15 zu Erhebungen 18 und die an der Mantelfläche 20 ausgebildeten Erhebungen 48 zu Ausbuchtungen 47, die Freiräumen 37 bilden. In diese Freiräume 37 werden auch Nahrungsmittel 36, ob größer, kleiner oder flüssig, vom Messer 8 hineinbefördert, an den Wänden 50 der Ausbuchtungen 47 gebremst und umgelenkt. Wenn größere Teile der Nahrungsmittel 36 in die Ausbuchtungen 47 gelangen, werden sie, wenn sie auch in den Wirkungskreis 42 des Messers 8 eingreifen, von den Spitzen der Schneidkanten 10 erfaßt, zerkleinert und wieder in Umfangsrichtung D bzw. gleich durch die Durchlässe 27 radial nach außen befördert, wie dies die Pfeilpaare 38 bzw. 39 nach Figuren 5 und 11 zeigen. Die zur Drehrichtung D querstehenden Wände 50 der Ausbuchtungen 47, die über die gesamte Länge der Innenwand 7 bis zur Abdeckscheibe 5 verlaufen, dienen dazu, daß die Nahrungsmittel 36 schlagartig gebremst, umgelenkt und dabei intensiv vermischt werden. Dabei gelangt ein großer Teil der Naharungsmittel wieder in den Wirkungskreis 42 des Messers 8, wird wieder vom Messer 8 zerschnitten, wieder beschleunigt, in den nächsten Freiraum 37 transportiert, wieder gebremst und umgelenkt. Anschließend werden die außen liegenden Nahrungsmittel 36 gemäß der Pfeile 34 und der Pfeilfolge 32 wieder vom Messer 8 angesaugt und der gleiche Prozeß beginnt von vorne.

Auch die Pfeile 40, die in geringem Abstand an der Mantelfläche 20 der Abschirmung 1 nach unten verlaufen (Figuren 6 und 12) zeigen an, daß Nahrungsmittel 36 auch vom oberen Bereich her und radial von außen zur Öffnung 12 hin angesaugt werden. Durch die erfindungsgemäße Formgestaltung der Abschirmung 1 ergibt sich eine besonders intensive Durchmischung, Zerkleinerung, also ein besonders gutes Pürieren von Nahrungsmitteln 36. Dabei laufen die Durchlässe 27 nur so weit in die Wand 50 der Abschirmung 1 hinein (Maß g), daß im wesentlichen ein unangenehmes radiales Herausspritzen von Nahrungsmitteln 36 aus der Abschirmung 1 vermieden wird. Es werden aber auch Nahrungsmittel 36 aus den Freiräumen 37 in Richtung zum Boden 26 beschleunigt. Dabei ist natürlich wesentlich, daß das Messer 8 weitgehendst in den oberen Bereichen der Durchlässe 27 verläuft. Wäre es zu nahe an der Öffnung 12 angeordnet, würden die Nahrungsmittel 36 zu stark aus den Durchlässen 27 radial nach außen herausspritzen. Ebenso wäre auch die Gefahr von Verletzungen einer Hand einer Bedienungsperson größer. Die Anordnung des Messers 8 erfolgt gegenüber den Durchlässen 27 derart, daß der eine Schenkel 11 etwa mittig in Höhe der Durchlässe 27, während der andere Schenkel 13 etwas oberhalb der Durchlässe 27 verläuft (Figuren 6, 12 und 13).

An dieser Stelle sei noch erwähnt, daß durch die Angabe der Pfeile 33, 34, 35, 38 und 39 nur der ideale Fließverlauf weniger Nahrungsmittelteilchen wiedergegeben werden soll. In der Praxis während des Betriebs eines Stabamixers mit der erfindungsgemäßen Abschirmung 1 kann man derartige Strömungen nur global feststellen.

Wird die Öffnung 12 der Abschirmung 1 aus einer Nahrungsmittellüssigkeit so weit herausgehoben, daß die Saugkräfte des Messers 8 Luft über die Durchlässe 27 ansaugen, so wird diese Luft im Raum 6 der Abschirmung 1 mit den Nahrungsmitteln 36 intensiv vermischt und es entsteht eine besonders luftige bzw. schaumige Nahrungsmittelmasse.

Dadurch, daß dann, wenn die Abstellfläche 19 der Abschirmung 1 am Topfboden 26 bündig anliegt, die Nahrungsmittel 36 nur noch über die Durchlässe 27 nach außen gelangen, besteht auch nicht mehr die Gefahr des Festsaugens der Abschirmung 1 am Topfboden 26, da jederzeit mit dem Raum des Topfes über die Durchlässe 27 eine Verbindung zum Inneren des Raumes 6 der Abschirmung 1 besteht. Es ist also leicht möglich, die Abschirmung 1 stets vom Topfboden 26 ohne großen Kraftaufwand abzuheben und wieder zu senken.

## Patentansprüche

1. Abschirmung (1) für die Verwendung in einem Haushaltsgerät, insbesondere Stabmixer oder Handrührer, mit einem von der Innenwand (7) der Abschirmung (1) gebildeten Raum (6), der von der unteren Seite her über eine die Nahrungsmittel (36) zu- bzw. abführende Öffnung (12) zugänglich ist, wobei in dem Raum (6) ein messerähnliches Arbeitswerkzeug (8) von einer Antriebswelle (3) derart in Drehung bringbar ist, daß Nahrungsmittel (36) von diesem erfaßt, zerkleinert und/oder vermischt werden,
**dadurch gekennzeichnet,**
**daß** die Abschirmung (1) glockenförmig ausgebildet ist, daß die Oberfläche der Innenwand (7) der glockenförmigen Abschirmung (1) an ihrem Umfang mehrere nach außen gerichtete Ausbuchtungen (47) zur Bildung von Freiräumen (37) aufweist, und daß die Ausbuchtungen (47) auf der Kontur der Mantelfläche (20) der Abschirmung (1) sich als Erhebungen (48) abzeichnen.

2. Abschirmung nach Anspruch 1,
**dadurch gekennzeichnet,**
**daß** die Ausbuchtungen (47) sich auf kürzestem Wege in Richtung der Antriebsachse (14) der Abschirmung (1) erstrecken.

3. Abschirmung nach Anspruch 1,
**dadurch gekennzeichnet,**
**daß** zwischen den Ausbuchtungen (47) an der Innenwand (7) der Abschirmung (1) Erhebungen (18) entstehen, die wiederum an der Mantelffläche (20) der Abschirmung (1) Einschnürungen (15) bilden.

4. Abschirmung nach Anspruch 3,
**dadurch gekennzeichnet,**
**daß** die mit den Ausbuchtungen (47) und den Erhebungen (18) versehene Innenwand (7) der Abschirmung (1) in ihrem Querschnitt von wellen- oder zickzackförmigen Ringen (43) gebildet wird.

5. Abschirmung nach Anspruch 4,
**dadurch gekennzeichnet,**
**daß** die Mantelfläche (20) der Abschirmung (1) in ihrem Querschnitt wellen- oder zickzackförmige Ringe (44) bildet, die konzentrisch zu den inneren Ringen (43) verlaufen und die kongruent zu diesen sind.

6. Abschirmung nach Anspruch 1,
**dadurch gekennzeichnet,**
**daß** die Tiefe (t) der Ausbuchtungen (47) in Längsrichtung zur Öffnung (12) hin zunimmt.

7. Abschirmung nach Anspruch 3,
**dadurch gekennzeichnet,**
**daß** die Breite (b) der Ausbuchtungen (47) bzw. der Einschnürungen (15) über ihre gesamte Länge zur Öffnung (12) hin zunimmt.

8. Abschirmung nach Anspruch 3,
**dadurch gekennzeichnet,**
**daß** die von der Öffnung (12) sich auf der Mantelfläche (20) wegerstreckenden Einschnürungen (15) derart verlaufen, daß sie in der Mantelfläche (20) im oberen Endabschnitt (49) der Abschirmung (1) auslaufen.

9. Abschirmung nach Anspruch 2,
**dadurch gekennzeichnet,**
**daß** sich die Ausbuchtungen (47) an der Innenwand (7) zu dem oberen Endabschnitt (49) hin verkleinern und im oberen Ende sogar an der Innenwand (7) auslaufen.

10. Abschirmung nach Anspruch 3,
**dadurch gekennzeichnet,**
**daß** die Ausbuchtungen (47) bzw. die Erhebungen (18) sich im wesentlichen parallel zur Antriebsachse (14) der Abschirmung (1) erstrecken und daß ihre Breite (b) zur Öffnung (12) hin zunimmt.

11. Abschirmung nach Anspruch 3,
**dadurch gekennzeichnet,**
**daß** die Ausbuchtungen (47) bzw. die Erhebungen (18) unter einem Winkel schräg zur Antriebsachse (14) verlaufen.

12. Abschirmung nach Anspruch 1,
**dadurch gekennzeichnet,**
**daß** der die Öffnung (12) begrenzende Rand der Abschirmung (1), in Seitenansicht von außen auf die Abschirmung (1) gesehen, Wellentäler (45) und Wellenberge (52) aufweist, welche in radialer Richtung Durchlässe (27) für die Nahrungsmittel (36) bilden.

13. Abschirmung nach Anspruch 12,
**dadurch gekennzeichnet,**
**daß** die Wellentäler (45) und Wellenberge (52) mit dem Rand (46) der Öffnung (12) in Seitenansicht ebenfalls einen wellen- oder zickzackförmigen Verlauf aufweisen.

14. Abschirmung nach Anspruch 12,
**dadurch gekennzeichnet,**
**daß** sich die Wellentäler (45) mit den Einschnürungen (15) derart überlagern, daß im Punkt (P) der tiefste Bereich der Einschnürung (15) auf den tiefsten Bereich des Wellentals (45) fällt.

15. Abschirmung nach Anspruch 12,
**dadurch gekennzeichnet,**
**daß** die Wellenberge (52) sich mit den Einschnürungen (15) derart überlagern, daß im Punkt (P1) der tiefste Bereich der Einschnürung (15) auf den höchsten Bereich des Wellenberges (52) fällt.

16. Abschirmung nach Anspruch 14 oder 15,
**dadurch gekennzeichnet,**
**daß** die Oberfläche der Innenwand (7) kongruent zur Mantelfläche (20) der Abschirmung (1) verläuft.

17. Abschirmung nach Anspruch 13,
**dadurch gekennzeichnet,**
**daß** die glockenförmige Abschirmung (1) konzentrisch zur Antriebsachse (14) und daß der Rand (46) symmetrisch zu dieser verläuft.

## Claims

1. A shield (1) for use on a household appliance, particularly a hand blender or a hand mixer, having a space (6) formed by the inner wall (7) of the shield (1) and accessible from the bottom via an opening (12) through which food (36) is supplied and discharged, a blade-like processing tool (8) inside the space (6) being adapted to be set in rotation by a drive shaft (3) so that the food (36) is caught, comminuted and/or mixed by said tool,
**characterized in that** the shield (1) is of a bell-shaped configuration, that the surface of inner wall (7) of the bell-shaped shield (1) is equipped on its circumference with several outwardly extending bulges (47) for the formation of clearance spaces (37), and that said bulges (47) emerge as elevations (48) on the contour of the envelope surface (20) of the shield (1).

2. The shield as claimed in claim 1,
**characterized in that** the bulges (47) extend in the direction of the drive axis (14) of the shield (1), taking the shortest route.

3. The shield as claimed in claim 1,
**characterized in that** elevations (18) result between the bulges (47) on the inner wall (7) of the shield (1), said elevations forming in turn constrictions (15) on the envelope surface (20) of the shield (1).

4. The shield as claimed in claim 3,
**characterized in that** the inner wall (7) of the shield (1) provided with the bulges (47) and the elevations (18) is formed of rings (43) shaped in an undulating or zigzagging configuration in cross section.

5. The shield as claimed in claim 4,
**characterized in that** the envelope surface (20) of the shield (1) forms rings (44) shaped in an undulating or zigzagging configuration in cross section, said rings extending concentrically with the inner rings (43) and being congruent therewith.

6. The shield as claimed in claim 1,
**characterized in that** the bulges (47) increase in depth (t) in the longitudinal direction towards the opening (12).

7. The shield as claimed in claim 3,
**characterized in that** the bulges (47) and the constrictions (15) increase in width (b) over their entire length towards the opening (12).

8. The shield as claimed in claim 3,
**characterized in that** the constrictions (15) extending on the envelope surface (20) away from the opening (12) run out in such a way as to end on the envelope surface (20) in the upper end section (49) of the shield (1).

9. The shield as claimed in claim 2,
**characterized in that** the bulges (47) on the inner wall (7) become progressively smaller towards the upper end section (49), eventually even running out on the inner wall (7) in the upper end.

10. The shield as claimed in claim 3,
**characterized in that** the bulges (47) and the elevations (18) extend essentially parallel to the drive axis (14) of the shield (1), increasing in width (b) towards the opening (12).

11. The shield as claimed in claim 3,
**characterized in that** the bulges (47) and the elevations (18) extend obliquely at an angle to the drive axis (14).

12. The shield as claimed in claim 1,
**characterized in that** the brim of the shield (1) bounding the opening (12), as seen looking in a side view at the shield (1) from outside, has wave troughs (45) and wave crests (52) forming passages (27) for the food materials (36) in radial direction.

13. The shield as claimed in claim 12,
**characterized in that** the wave troughs (45) and the wave crests (52), in combination with the brim (46) of the opening (12), follow equally an undulating or zigzagging course as seen in a side view.

14. The shield as claimed in claim 12,
**characterized in that** the wave troughs (45) coincide with the constrictions (15) in such fashion that at point (P) the deepest area of the constriction (15) is coincident with the deepest area of the wave through (45).

15. The shield as claimed in claim 12,
**characterized in that** the wave crests (52) coincide with the constrictions (15) in such fashion that at point (P1) the deepest area of the constriction (15) is coincident with the highest area of the wave crest (52).

16. The shield as claimed in claim 14 or 15,
**characterized in that** the surface of the inner wall (7) extends so as to be congruent with the envelope surface (20) of the shield (1).

17. The shield as claimed in claim 13,
**characterized in that** the bell-shaped shield (1) extends concentrically with the drive axis (14) and that the brim (46) extends symmetrically thereto.

## Revendications

1. Écran protecteur (1) destiné à un appareil ménager, en particulier à un mixeur ou à un batteur, comportant un espace (6) formé par la paroi intérieure (7) de l'écran (1), qui est accessible depuis le côté inférieur via une ouverture (12) amenant ou évacuant les produits alimentaires (36), un outil de travail (8) analogue à un couteau pouvant être mis en rotation par un arbre d'entraînement (3) dans l'espace (6), de telle sorte que les produits alimentaires (36) sont saisis par celui-ci, fragmentés et/ou mélangés, **caractérisé en ce que** l'écran (1) est réalisé en forme de cloche, **en ce que** la surface de la paroi intérieure (7) de l'écran en forme de cloche (1) présente sur sa périphérie plusieurs creux (47) dirigés vers l'extérieur pour former des intervalles libres (37), et **en ce que** les creux (47) sont représentés comme des bosses (48) sur le contour de la surface enveloppe (20) de l'écran (1).

2. Écran selon la revendication 1, **caractérisé en ce que** les creux (47) s'étendent sur le trajet le plus court en direction de l'axe d'entraînement (14) de l'écran (1).

3. Écran selon la revendication 1, **caractérisé en ce que** des bosses (18) se forment entre les creux (47) sur la paroi intérieure (7) de l'écran (1), qui forment à leur tour des rétrécissements (15) sur la surface enveloppe (20) de l'écran (1).

4. Écran selon la revendication 3, **caractérisé en ce que** la paroi intérieure (7) de l'écran (1) pourvue des creux (47) et des bosses (18) est formée, à l'égard de sa section, par des bagues en forme ondulée ou en zigzag (43).

5. Écran selon la revendication 4, **caractérisé en ce que** la surface enveloppe (20) de l'écran (1) forme, à l'égard de sa section, des bagues en forme ondulée ou en zigzag (44) qui s'étendent concentriquement aux bagues intérieures (43) et sont en concordance par rapport à celles-ci.

6. Écran selon la revendication 1, **caractérisé en ce que** la profondeur (t) des creux (47) augmente en direction longitudinale vers l'ouverture (12).

7. Écran selon la revendication 3, **caractérisé en ce que** la largeur (b) des creux (47) ou des rétrécissements (15) augmente sur toute leur longueur vers l'ouverture (12).

8. Écran selon la revendication 3, **caractérisé en ce que** les rétrécissements (15) s'éloignant de l'ouverture (12) sur la surface enveloppe (20) s'étendent de telle sorte qu'ils se terminent dans la surface enveloppe (20) dans le tronçon d'extrémité supérieur (49) de l'écran (1).

9. Écran selon la revendication 2, **caractérisé en ce que** les creux (47) sur la paroi intérieure (7) se rapetissent vers le tronçon d'extrémité supérieur (49) et **en ce qu'**ils se terminent même sur la paroi intérieure (7) à l'extrémité supérieure.

10. Écran selon la revendication 3, **caractérisé en ce que** les creux (47) ou les bosses (18) s'étendent sensiblement parallèlement à l'axe d'entraînement (14) de l'écran (1), et **en ce que** leur largeur (b) augmente en direction de l'ouverture (12).

11. Écran selon la revendication 3, **caractérisé en ce que** les creux (47) ou les bosses (18) s'étendent sous un angle en oblique par rapport à l'axe d'entraînement (14).

12. Écran selon la revendication 1, **caractérisé en ce que** la bordure de l'écran (1) qui délimite l'ouverture (12) présente, en vue latérale depuis l'extérieur sur l'écran (1), des vallées d'ondulations (45) et des sommets d'ondulations (52) qui forment en direction radiale des passages (27) pour les produits alimentaires (36).

13. Écran selon la revendication 12, **caractérisé en ce que** les vallées d'ondulations (45) et les sommets d'ondulations (52) présentent avec la bordure (46) de l'ouverture (12), en vue latérale, également un tracé en forme ondulée ou en zigzag.

14. Écran selon la revendication 12, **caractérisé en ce que** les vallées d'ondulations (45) chevauchent les rétrécissements (15) de telle sorte qu'au point (P) la zone la plus profonde du rétrécissement (15) tombe sur la zone la plus profonde de la vallée d'ondulation (45).

15. Écran selon la revendication 12, **caractérisé en ce que** les sommets d'ondulations (52) chevauchent les rétrécissements (15) de telle sorte qu'au point (P1) la zone la plus profonde du rétrécissement (15) tombe sur la zone la plus haute du sommet d'ondulation (52).

16. Écran selon l'une ou l'autre des revendications 14 et 15, **caractérisé en ce que** la surface de la paroi intérieure (7) s'étend en concordance par rapport à la surface enveloppe (20) de l'écran (1).

17. Écran selon la revendication 13, **caractérisé en ce que** l'écran (1) en forme de cloche s'étend concentriquement à l'axe d'entraînement (14), et **en ce que** la bordure (46) s'étend à symétrie par rapport à celui-ci.
